# EUROPEAN PATENT APPLICATION

(11) **EP 3 459 362 A1**
(43) Date of publication of application: **27.03.2019**
(21) Application number: 17743370.3
(22) Date of filing: 17.05.2017
(51) Int. Cl.: A23L 7/196, A23L 19/00, A23L 13/00

(54) **METHOD FOR PREPARING RICE-BASED FOODS**

(30) Priority: 18.05.2016 ES 201630646
(71) Applicant: Color Productos, S.L., 46021 Valencia (ES)
(72) Inventor: REYNA DOMENECH, Enrique, 46021 Valencia (ES)
(74) Representative: Herrero & Asociados, S.L.
(86) International application number: PCT/ES2017/070320
(87) International publication number: WO 2017/198884

(57) **Abstract**

The present invention relates to a method for preparing foods comprising a base of rice, where the method comprises the steps of boiling and setting aside the stocks, oils and/or fats derived from cooking a first group of ingredients until reducing them obtaining a viscous fluid for the subsequent mixing thereof with a second group of solid ingredients and an amount of raw rice, obtaining a single mixture, and finally mixing said single mixture with a third group of uncooked ingredients ready to be packed and sterilized in one or more containers to be put up for sale and marketed, and all this ready to be heated and served for consumption, conserving all the flavor of the prepared product.

## Description

### Technical Field of the Invention

The present invention relates to a method for preparing foods comprising a base of rice, and to the food product obtained based on the application of said method, reducing the cooking time thereof with a series of ingredients such as meat, fish, vegetables and/or greens, where both the method and the food product are comprised in the food chemistry and agrifood industry, and specifically in the sector of packed, prepared foods provided for subsequent cooking and consumption both at the individual consumer level and in a restaurant, bar, or fast-food establishment-type food catering business.

The method for preparing foods comprising a base of rice, considerably reducing the cooking and packing time thereof, is the object of the invention and has a main purpose of describing the method thereof based on reduction of various stocks to attain the so-called viscous fluid and the immediate combination of ingredients thereof in a blend with raw rice, so-called a single mixture, with raw rice, shortening the time usually required for cooking rice and packing same without liquids in one or more packages. The result is applicable to chicken (meat) paella-, *arroz a banda-* (a dish of rice cooked in fish stock) and vegetable paella-type foods and to any type of rice dish: dry, brothy, creamy, etc.; which are packed without liquids and in their most convenient state (for example: frozen or cooled or preserved naturally for consumption) and marketed ready to be subsequently cooked in less time and served both in the context of individual consumer and businesses of the food catering sector, where said foods conserve all the flavor of foods cooked at the very instant and with homemade flavor, as a result of the novel method of preparing foods comprising a base of rice; said method having a series of novel and perfectly structured steps for being able to be implemented industrially, new additional steps being able to be added mostly in order to add more ingredients or condiments, depending on the type of specific rice recipe to be prepared.

### Background of the Invention

By way of introduction, commercial presentation of rice-based packed foods ready for subsequent heating and enjoyment is widely known. In this sense, culinary utilization of rice and its different variants and with different industrial techniques is known: for example, rice cooked with stock; with raw rice with stock; half-cooked or cooked frozen or boiled and even cooked or half-cooked cooled rice, etc, where the method for preparing foods usually comprises a base of rice as the primary ingredient and at least an incorporation of secondary ingredients which can be meat and/or fish and/or greens in solid form or in powder form or liquids in the form of sauces or stocks. In this sense, two preparation methods used today are known:
A) A first method for the so-called pre-cooked products which comprises the steps of pre-cooking together both the primary ingredient, i.e., rice, and the secondary ingredients mixed with a base of stocks and sauces based on ingredients such as meat or fish and/or greens. Said mixture is thus packed in one or two containers such that, once the user acquires it, the consumer him/herself will be the one to pour the content into a pot or the like and proceed to cook the rice with the stock included in the container or with water and combine sauces or powders and in the time usually required for cooking rice which is around 20 minutes. They are usually presented in plastic, glass or metal containers at room temperature, cooled or frozen.
B) A second method for the so-called cooked products which comprises the steps of reheating together both the primary ingredient, i.e., already cooked, nearly cooked or nearly boiled frozen rice, and the secondary ingredients cooked with secondary ingredients with a base of meat or fish and/or greens, dissolved with sauces that seek to attain the particular flavor thereof. Once the user acquires it, the consumer him/herself will be the one to pour the content into a pot or the like for heating in a microwave oven or at most sautéing the rice along with the rest of the ingredients included in the container, shortening or completing the rice cooking time by means of the single method of reheating the product since it does not have any stock and the rice is already nearly cooked or fully cooked. They can be presented in plastic, glass or metal containers at room temperature, cooled or frozen.

However, the following stands out in both preparation and subsequent packing procedures; first, the loss of original flavor of the packed foods, since once mixed with rice and the product is completed, said rice does not absorb all the flavors of the ingredients as they have been cooked or pre-cooked beforehand, losing their flavors over time, as a result of the type of packing, liquids or stocks that diminish the original flavors, failing to obtain a degree of satisfaction of the food that is comparable to the taste and flavor of a rice dish prepared at the very instant at home; secondly, there is a need to also take into account that the preparation of food with a base of raw or pre-cooked rice generally entails a specific amount of time until the rice itself is cooked, adding on to the total time with the cooking of the enclosed ingredients in particular. In summary, shortening the time approximately by half to enable the home consumer, in particular, and the professional cook or restaurateur, to impeccably prepare said food at home and in a restaurant-, bar- or fast-food establishment-type food catering business, is very difficult.

For this reason and in view of the drawbacks in terms of flavor and time originating from both pre-cooked and cooked foods with a base of rice existing on the market: there is a need of a method for preparing foods comprising a base of rice and at least primary ingredients which can be meat and/or fish, and at least secondary, tertiary and quaternary ingredients which can be meat and/or fish with vegetables and/or greens, along with foods in solid forms and in pieces from the ingredients, assuring flavor and unique nutritional quality similar to rice dishes cooked at the very instant at home, and involving a shorter preparation time which results in a noticeable improvement both for the individual consumer and for a restaurant-, bar- or fast-food establishment-type food catering establishment. Said method is formed by a reduced number of clear, perfectly structured steps making up a novel preparation with respect to the state of the art known until now.

### Description of the Invention

The present invention relates to a method for preparing foods comprising a base of rice, which comprises the following steps:
a) cooking a first group of ingredients defined as the primary ingredients;
b) setting aside, on one hand the stocks and on the other the oils and/or fats, both derived from cooking the primary ingredients
c) reducing said stocks set aside in step b) until obtaining a liquid defined as a viscous fluid;
d) cooking a second group of ingredients;
e) setting aside, on one hand the solid part and on the other hand the oils and/or fats, both derived from cooking the second group of ingredients in step d)
f) making a first mixture of:
   - an amount of raw rice,
   - the solid part set aside in step e) and corresponding to the second group of cooked ingredients; and
   - the viscous fluid obtained in step c) until obtaining a mixture of ingredients defined as a single mixture;
g) making a second mixture of:
   - the single mixture,
   - a third group of uncooked ingredients defined as quaternary ingredients,
   - the oils and/or fats derived from cooking said primary ingredients and set aside in step b); and
   - the oils and/or fats derived from cooking the second group of ingredients and set aside in step e);
h) packing said second mixture obtained in step g) in a container;
i) sterilizing said container in an autoclave; and
j) transporting said sterilized container to the corresponding packaging and storage for sale and consumption, and thereby obtaining a product packed in a single container.

As a result of the sequencing of the steps of the method object of the invention, such method can be structured through three main lines, where the novel principles of the method object of the invention compared to the state of the art known today are observed:
- A first line intended for obtaining stocks and oils/fats from the groups of primary ingredients, set aside to attain reductions in the part of the invention so-called viscous fluid, such that said viscous fluid has an approximate relative moisture of 90 grams of water/100 grams of product +/- 5 grams of water, an approximate density of 1.05 kg/liter +/- 0.03 kg/liter, and an approximate viscosity of 60,000 cP +/- 5,000 cP. (first novelty: sum of elements forming the stocks).
- A second line intended for obtaining the solid part from the second group of ingredients, such that such ingredients come together in the part of the invention so-called single mixture (second novelty: sum of elements forming the viscous fluid, solid ingredients and raw rice). This unique and specific moment of the invention is where the viscous fluid of the first line (primary ingredients), along with the base ingredient, i.e., rice in raw state, (primary ingredient), are mixed at room temperature (25°C) for about 3 to 5 minutes without requiring heat or cooking and along with the solids from the second line of the method. The so-called single mixture of the invention at hand allows the rice in raw state and still to be cooked, to turn into a food condensate of about 25 to 28 Bx, so that it absorbs and gets the full flavor of the recipe that is being prepared, and introducing into the rice grain in raw state the full flavor of the sum of the first and second group of ingredients through a process of providing moisture and mixing at room temperature without requiring heat or cooking, which successfully conserves the original and natural flavors of all the ingredients, perfected with the quaternary ingredients added directly to the packing. Once the consumer carries out the final cooking of the rice, by adding only water, the raw rice cooks in about half the time compared to the conventional cooking time of any type of raw rice (third novelty: shorter time), this notable time reduction being considered part of the invention, since the consumer starts the cooking process based on raw rice. Furthermore, the user will be see that the smells and original flavors are comparable to prepared homemade food as a result of the natural aromas conserved before cooking and introduced in the rice grain in raw state, due to the particular and novel preparation of the inventive idea.
- A third line intended for obtaining the uncooked solids and cooked surplus liquids, all originating from the third group of ingredients in a single package for the individual consumer, and in the most convenient state thereof (fourth novelty: type of packing).

In summary, before packing, there are three groups of clearly differentiated foods: the 1^{st} group being the viscous fluid extracted from the primary ingredients: (sum of the stocks); the 2^{nd} group being the single mixture: the solid ingredients from the first and second group of ingredients (sum of the Viscous fluid, solid ingredients and raw rice), and finally, the 3^{rd} group being the solids and liquids form the third group of ingredients.

In this manner, the food product thus obtained combines four key and essential advantages with respect to the previously known state of the art:
First: the flavor. The packed product picks up and has all the flavor of the rice preparation as if it has been prepared at the very moment, since the consumer cooks the rice with the liquids that are introduced therein and originate from the mixture of all the groups of primary and secondary ingredients, complemented with the third group of uncooked ingredients, compared to the state of the art. (Sum of the stocks) and (sum of the viscous fluid, solid ingredients and raw rice).
Second: the time. The packed product with rice in raw state is ready to be cooked, drastically reducing the cooking time. The present invention contemplates the possibility of reducing the rice cooking time by about half or even more to have the rice ready for consumption, unlike foods with a base of raw or pre-cooked rice which entail a specific time (about 20 minutes) plus the times for mixing the ingredients, stocks and sauces, in addition to the need to always keep an eye on how the cooking goes. In this case, it is only required to add the product in boiling water as described in detail below in the section of "Preferred Embodiment of the Invention" and to adjust the product by adding salt according to the customer's or cook's taste. (Shorter time). A more natural product the preparation method of which, even though is industrial, pertains to a novel traditional method since stocks, sauces or powders do not have to be added for cooking, rather only water has to be finally and simply added, is achieved at the same time.
- Third: Stock- or liquid-free package production with flavor introduced only in the completely raw rice and in different single package or packages of ingredients. A single package without flavoring liquid stocks or sauces or powders for the individual consumer, or in different packages for the consumer of the food catering sector, without flavoring liquids or sauces or powders cannot be found on the commercial market, such that the product is packed in its most convenient state, for example, naturally packed, preserved for the individual consumer to cook it at home, or cooled or frozen for the consumer of the commercial food catering sector such as bars, restaurants or fast-food establishments, depending on the cooking thereof.
- Fourth: flavor conservation over time. Since it is a product prepared in preserved state, and furthermore, with the specific flavor imparted to the rice in raw state, this allows maintaining the original flavors of the first and second groups of ingredients and perfected by the third group of ingredients when cooking same in the future, despite the passage of time, because the original flavors of the ingredients are conserved as they lack liquids that naturally break down the substances over the course of months.

As regards the general method for multiple package production (for professionals), it is different from the single package production (for home), in that the single mixture does not comprise the three groups of ingredients, rather these are packed and made to pass though the autoclave independently, being finally mixed by the professional, such that the method can be structured as follows:
a) cooking a first group of ingredients defined as the primary ingredients
b) setting aside, on one hand the stocks and on the other the oils and/or fats, both derived from cooking the primary ingredients;
c) reducing said stocks set aside in step b) until obtaining a liquid defined as a viscous fluid;
d) making a mixture of:
   - an amount of raw rice,
   - the viscous fluid obtained in step c) until obtaining a mixture of ingredients defined as a single mixture;
e) packing said single mixture obtained in step d) in a first container;
f) cooking a second group of ingredients;
g) packing the cooked solid part in step f) and corresponding to the second group of ingredients in at least a second container;
h) packing a third group of uncooked ingredients and the oils and/or fats derived from cooking said primary ingredients and set aside in step b), defined as quaternary ingredients, in a third container
i) sterilizing each of the containers in an autoclave; and
j) transporting respective sterilized containers to the corresponding packaging and storage for sale and consumption

A product packed in at least three containers is obtained, where the first container comprises the single mixture, the second container comprises the second group of ingredients, and the third container comprises the uncooked quaternary ingredients.

It must be pointed out that the present invention contemplates the preferred option in which the second group of ingredients is in turn subdivided into two sub-groups:
- a first sub-group of ingredients defined as secondary ingredients; and
- a second sub-group of ingredients defined as tertiary ingredients, where both sub-groups are cooked independently with respect to one another since the type of product may require a different type of cooking: frying, boiling, etc.

In this manner, step g) of packing the cooked solid part of the second group of ingredients, is subdivided into two sub-steps
e1) packing the secondary ingredients cooked in step f), and the cooking of which is performed independently with respect to the tertiary ingredients, in a second container; and
e2) packing the tertiary ingredients cooked in step f), and the cooking of which is performed independently with respect to the secondary ingredients, in a third container.

In relation to the type of ingredients used, description is provided for the option in which:
- the primary ingredients used for preparing the viscous fluid comprise meat, fish, vegetables and/or greens;
- the second group of ingredients used for preparing the solid part of the food to be prepared comprises meat, fish, vegetables and/or greens; and
- the quaternary ingredients comprise uncooked foods such as spices and/or additives.

Paying special attention to the physical properties of the viscous fluid, the present invention contemplates the possibility of, in step c) of reducing the stocks set aside in step b) until obtaining a liquid defined as a viscous fluid, the stocks are reduced until the viscous fluid comprises:
- a relative moisture comprised between 85 and 95 grams of water per 100 grams of viscous fluid
- a density comprised between 1.02 and 1.08 kilograms per liter of viscous fluid; and
- a viscosity comprised between 55000 and 65000 centipoises.

Finally, the preferred option in which in the step of sterilizing said at least one container in an autoclave is described, said sterilizing is performed at a temperature comprised between 110 and 130 degrees Celsius.

### Description of the Drawings

To complement the description that is being made and for the purpose of aiding to provide a better perspective of the features of the invention according to a preferred practical embodiment thereof, a series of drawings is attached as an integral part of said description in which the following has been depicted with an illustrative and non-limiting character:

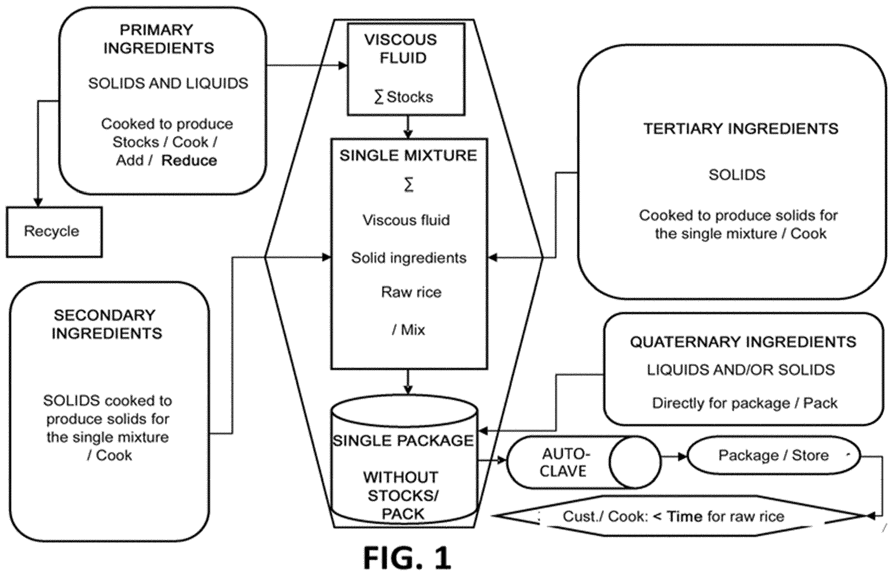

Figure 1 shows an overall diagram of the general preparation and single package production method of the invention with 4 main blocks, explaining what are the primary, secondary, tertiary and quaternary ingredients in general and the general preparation method; each block has a line pointing to the objects of the invention. Furthermore, the object of the invention is indicated in 2 hexagons: a first hexagon highlighting the production of the viscous fluid and the single mixture for raw rice to the stock-free single package-production process; and a second final hexagon highlighting the reduction of the time required by the customer to cook the raw rice.

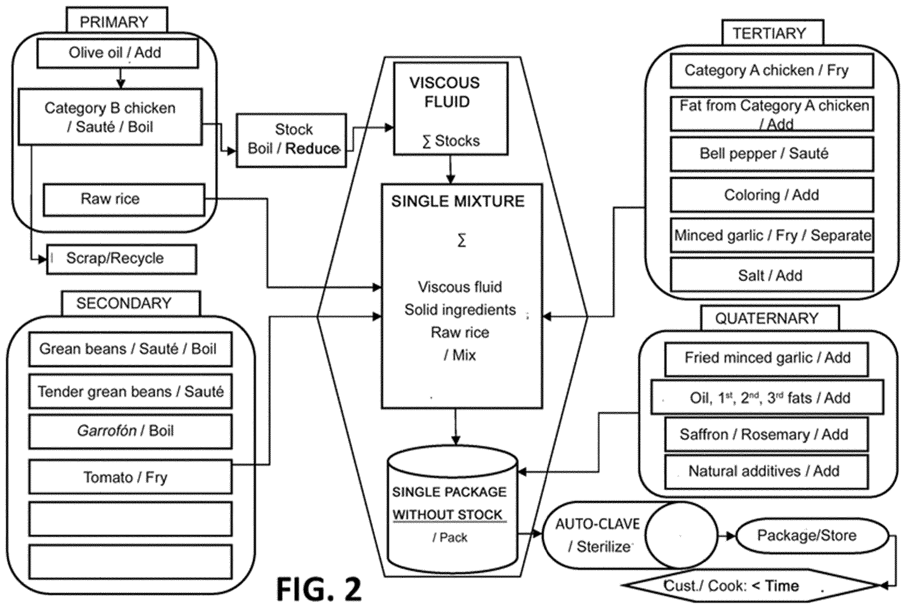

Figure 2 shows the main example of the preferred embodiment of the invention based on the method and single package production according to Figure 1, illustrating a diagram with 4 standard blocks from the production of the viscous fluid and the single mixture for chicken (meat) paella to the stock-free single package-production process; but with the particularity of explaining each of the primary, secondary, tertiary and quaternary ingredients in general and their general preparation process in particular, highlighting the reduction of the time required by the customer to cook the raw rice. Each block has a line pointing to the 2 hexagons, objects of the invention.

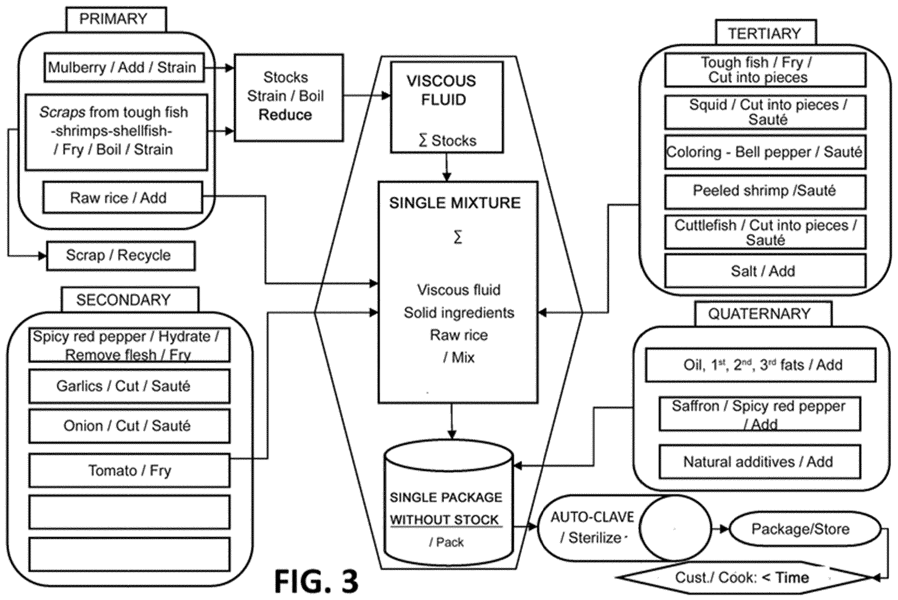

Figure 3 shows a second example of the preferred embodiment of the invention based on the method and single package production according to Figure 1, illustrating a diagram with standard 4 blocks, from the production of the viscous fluid and the single mixture for *arroz a banda* (a dish of rice cooked in fish stock), to the stock-free single package-production process; but with the particularity of explaining each of the primary, secondary, tertiary and quaternary ingredients in general and their general preparation process in particular, highlighting the reduction of the time required by the customer to cook the raw rice. Each block has a line pointing to the 2 hexagons, objects of the invention.

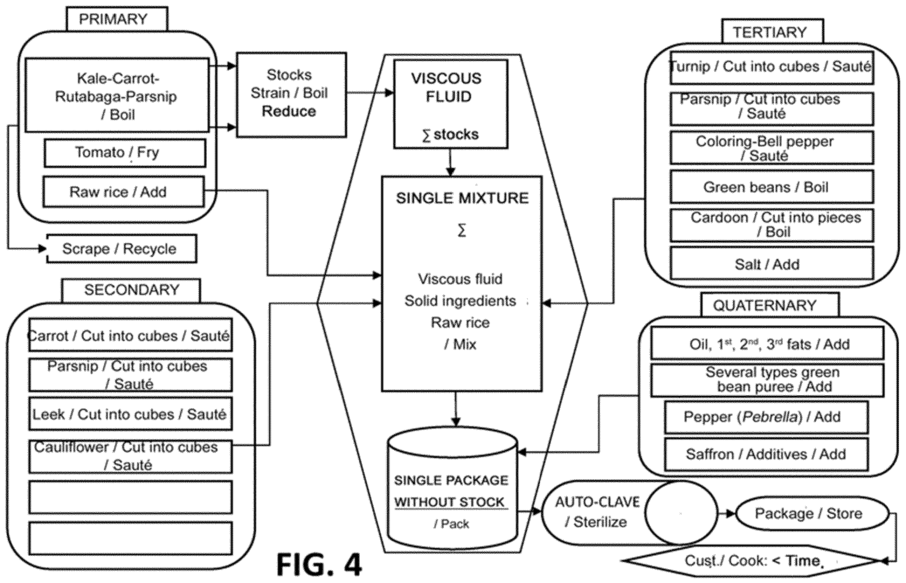

Figure 4 shows a third example of the preferred embodiment of the invention based on the method and single package production according to Figure 1, illustrating a diagram with standard 4 blocks, from the production of the viscous fluid and the single mixture for vegetable (greens and vegetable) paella to the stock-free single package-production process; but with the particularity of explaining each of the primary, secondary, tertiary and quaternary ingredients in general (except for all vegetables and greens since they are vegetable-based recipes) and their general preparation process in particular, highlighting the reduction of the time required by the customer to cook the raw rice. Each block has a line pointing to the 2 hexagons, objects of the invention.

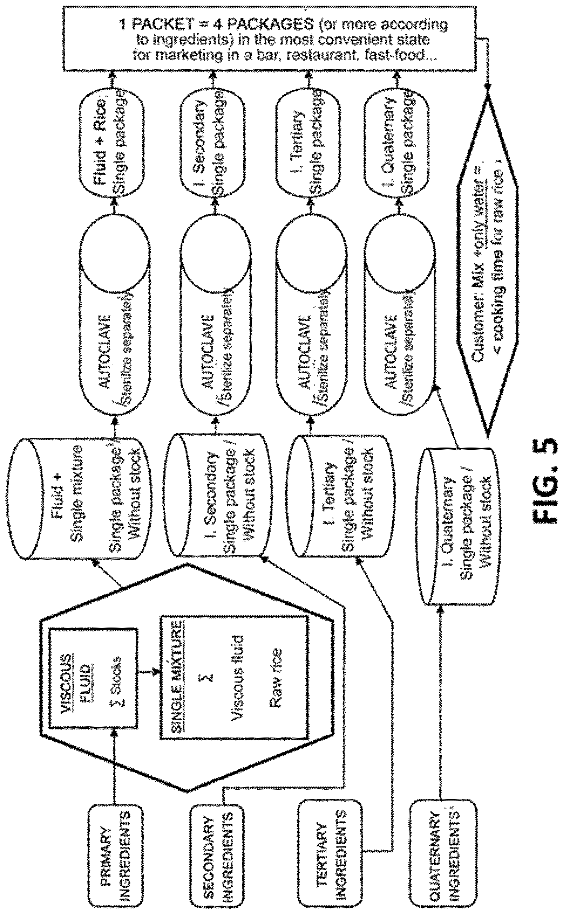

Figure 5 shows an overall diagram of the general preparation method and multiple package production of the invention with 4 main blocks of primary, secondary, tertiary and quaternary ingredients coinciding with the ingredients described in any of the preceding embodiments relating to Figures 2 to 4. Furthermore, the object of the invention are indicated in 2 hexagons: a first hexagon highlighting the production of the viscous fluid and the single mixture for raw rice to the stock-free packing process; and a second final hexagon highlighting the reduction of the time required by the customer to cook the raw rice. In this particular case, the secondary, tertiary and quaternary ingredients are packed independently to be finally mixed with water by professional chef.

### Preferred Embodiment of the Invention

It can be seen in Figure 1 a block diagram illustrating the steps of the general method for preparing foods comprising a base called viscous fluid and another called single mixture and four groups of ingredients for a single package production, which are:
- a group of primary ingredients that must be meat and/or fish and that can only be vegetables/greens for the exceptional case of recipes that are based on vegetables and the main ingredient of rice in raw state. They are solid and liquid ingredients cooked for producing stocks in order to attain stock reductions intended for creating the viscous fluid of the invention,
- a group of secondary ingredients that must be meat and/or fish and vegetables and/or greens and that can only be vegetables and/or greens for the exceptional case of recipes that are based on vegetables. They are solid ingredients cooked particularly to in turn only produce foods in solid forms and in pieces from the secondary ingredients intended for the single mixture of the invention.
- a group of tertiary ingredients that must be meat and/or fish and that can only be vegetables/greens for the exceptional case of recipes that are based on vegetables. They are only solid ingredients cooked in a way different from the secondary ingredients to obtain foods in solid forms and in pieces from the tertiary ingredients intended for the single mixture of the invention.
- a group of liquid and/or solid quaternary ingredients. They are uncooked ingredients, generally in natural state, without actual mixing or preparation and their natural preservatives, and they are usually surplus liquid of the secondary and/or tertiary ingredients, and only configured to be added directly to the package.

The single package production method object of the invention comprises the following steps:
a) cooking a first group of ingredients defined as the primary ingredients;
b) setting aside, on one hand the stocks and on the other the oils and/or fats, both derived from cooking the primary ingredients;
c) reducing said stocks set aside in step b) until obtaining a liquid defined as a viscous fluid;
d) cooking a second group of ingredients divided as secondary and tertiary ingredients, both being independent as regards their cooking steps;
e) setting aside, on one hand the solid part and on the other hand the oils and/or fats, both derived from cooking the second group of ingredients in step d);
f) making a first mixture of:
   - an amount of raw rice,
   - the solid part set aside in step e) and corresponding to the second group of cooked ingredients; and
   - the viscous fluid obtained in step c) until obtaining a mixture of ingredients defined as a single mixture;
g) making a second mixture of:
   - the single mixture,
   - a third group of uncooked ingredients defined as quaternary ingredients,
   - the oils and/or fats derived from cooking said primary ingredients and set aside in step b); and
   - the oils and/or fats derived from cooking the second group of ingredients and set aside in step e);
h) packing said second mixture obtained in step g) in a container;
i) sterilizing said container in an autoclave; and
j) transporting said sterilized container to the corresponding packaging and storage for sale and consumption.

Similarly, but for the context of marketing for a bar-, restaurant- or fast-food establishment-type business, the steps are those described below, differing only in the type of packing and mixing since this involves a multiple package production:
a) cooking a first group of ingredients defined as the primary ingredients;
b) setting aside, on one hand the stocks and on the other the oils and/or fats, both derived from cooking the primary ingredients;
c) reducing said stocks set aside in step b) until obtaining a liquid defined as a viscous fluid;
d) making a mixture of:
   - an amount of raw rice,
   - the viscous fluid obtained in step c) until obtaining a mixture of ingredients defined as a single mixture
e) packing said single mixture obtained in step d) in a first container;
f) cooking a second group of ingredients divided as secondary and tertiary ingredients, both being independent as regards their cooking steps;
g) packing the cooked solid part in step f) and corresponding to the second group of ingredients in at least a second container;
h) packing a third group of uncooked ingredients and the oils and/or fats derived from cooking said primary ingredients and set aside in step b), defined as quaternary ingredients, in a third container;
i) sterilizing each of the containers in an autoclave; and
j) transporting respective sterilized containers to the corresponding packaging and storage for sale and consumption but in different liquid-free packages in their most convenient state for the consumer in the food catering sector; for example, naturally packed in the manner in which it is preserved or cooled or frozen for consumption, depending on the consumer such as for bars, restaurants or fast-food establishments. This means that, since it is packed in its respective independent packages, according to the number of required ingredients, it is evident that specifically it holds in a first package the viscous fluid plus the single mixture with the raw rice; in a second package the secondary ingredients; in a third package the tertiary ingredients; in a fourth package the quaternary ingredients and in their most convenient state, for example, naturally packed in the manner in which it is preserved or cooled or frozen. Furthermore, according to the recipe, adding the required packages with the ingredients considered for other recipes prevent them being able to be mixed in the same packages in order to not mix the flavors, textures or consistencies of each ingredient of the rice recipe, as seen in the right hand side rectangle of Figure 5.

However, embodiments and application of the method object of the invention can be seen specifically in Figures 2 (meat), 3 (fish) and 4 (greens/vegetables). For example, Figure 2 shows the skilled person the steps for producing chicken (meat) paella specified for one portion at all times.
a) Sautéing in 25 grams of olive oil part of the primary ingredient, i.e., category B chicken, or 250 grams of shells in a tilting bratt pan in a temperature range between 200°C ± 5°C; the primary ingredient, i.e., liquid oil from frying the chicken, is set aside. The shells are boiled for three quarter of an hour ± 15 minutes in 250 ml of water per portion and they are recycled. Once this stock is attained, it is reduced until achieving the viscous fluid for the approximate time of 20 minutes ± 5 min, such that said viscous fluid has an approximate relative moisture of 90 grams of water/100 grams of product +/- 5 grams of water, an approximate density of 1.05 kg/liter +/- 0.03 kg/liter, and an approximate viscosity of 60,000 cP +/- 5,000 cP. (Sum of stocks). 100 grams of raw rice for one portion are set aside. The method for the primary ingredients ends here and they are set aside to be added to the future single mixture.
b) Sautéing and then boiling 100 grams of green beans for one portion, setting aside only the sautéed and boiled green beans. Sautéing 20 grams of green beans and setting them aside. Boiling 80 grams of *garrofón* (a typical Valencian legume) and setting them aside. Frying 250 grams of tomato until they are reduced to 60 grams ± 5 grams. The method of the secondary ingredients ends here and they are set aside to be added to the future single mixture.
c) Repeatedly boiling the liquids and stocks originating from the primary ingredients as indicated in section a).
d) Setting aside the liquid part obtained after the reductions defined from step a) to step c), obtaining a derivative liquid called viscous fluid from the mixture of the primary ingredients such that said viscous fluid has an approximate relative moisture of 90 grams of water/100 grams of product +/- 5 grams of water, an approximate density of 1.05 kg/liter +/- 0.03 kg/liter, and an approximate viscosity of 60,000 cP +/- 5,000 cP. (Sum of stocks). The production of the viscous fluid ends here.
e) Cooking the tertiary ingredients: 150 grams of category A chicken, specifically the wing or mid-thigh part, are fried per portion in a tilting bratt pan in a temperature range between 200°C ± 5°C; and the liquid tertiary ingredient in the form of oil from frying the chicken is set aside. 3 grams of sautéed bell pepper are added; 1.5 grams of food coloring and 3 grams of fried minced garlic are added, which garlic is separated, they are all being cooked independently, ending with 3 grams of salt, setting aside the solid and liquid parts to be added in the future to the single mixture. The method of the tertiary ingredients ends here.
f) Preparing the quaternary ingredients that do not require cooking: the fried minced garlic that has been set aside, 3 or 4 saffron pistils; 0.3 grams rosemary essence per portion, in addition to pooling the oils resulting from cooking the primary, secondary and tertiary ingredients to form the liquid part of the quaternary ingredient called fry oil in 3 grams ± 0.5 grams per portion, and natural additives at 0.05% of preservatives according to the law in force, for example, vitamin C and which will not change the flavor thereof. They are neither mixed with the viscous fluid nor with the single mixture since the go directly to the end of the package production. The method of the quaternary ingredients which will go directly to the package of the last step ends here.
g) Mixing the viscous fluid with the raw rice at room temperature (25°C) for about 3 to 5 minutes without requiring heat or cooking, reducing and concentrating said mixture until achieving a food concentrate if about 25 to 28 Bx. Pooling of completely raw rice with the viscous fluid ends here.
h) The solid ingredients resulting from cooking the secondary and tertiary ingredients are also added at room temperature without requiring heat or cooking to the combination of the viscous fluid with the raw rice, obtaining the so-called single mixture. (Sum of the viscous fluid, solid ingredients and raw rice).
i) Packing both the single mixture and the liquids and solids of the quaternary ingredients described in section f). The method up to the package production thereof ends here.
j) Transporting the container or containers (depending on the commercial purpose thereof indicated in the following paragraph) into an autoclave at a temperature comprised between 110° C and 130 degrees Celsius, configured for sterilizing and preserving the end product. The method of sterilizing in an autoclave ends here.
k) Transporting to the corresponding packaging and storage for sale and consumption but in their most convenient state; for example, naturally packed in the manner in which it is preserved or cooled or frozen for consumption at home or in the food catering sector. The example of the preferred embodiment of the invention ends here.

For the context of marketing, for bar-, restaurant- or fast-food establishment-type business and in a similar manner, all the steps from a) to f) described in the single package production as seen in the second hexagon of Figure 5 are repeated.

Subsequently, the consumer who, following the simple cooking instructions, only has to pour the ingredients either from the single package or from multiple packages (with the rice in raw state) into boiling water in a suitable container, adding salt to taste, and cook said mixture in a conventional oven, electric cooktop, gas stove or even over wood fire, shortening the conventional rest and cooking time by around half or less and depending at all times on the heat source used, conserving all the original flavor of a homemade dish to which there is usually a need to add longer prior preparation times compared to only cooking rice in raw state. (By way of example, the homemade chicken paella needs a conventional preparation time between 1.5 and 2 hours, according to what is provided in the recipe books).

This is therefore the technique which is the object of the invention and has a main purpose of describing the method thereof based on reduction of various stocks to attain the so-called viscous fluid and the immediate combination of ingredients thereof in a blend with raw rice, so-called a single mixture, shortening the time usually required for cooking rice and packing same without liquids in one or more packages. The result is applicable to chicken (meat) paella-, *arroz a banda-* (a dish of rice cooked in fish stock) and vegetable paella-type foods (greens) and to any type of rice dish: dry, brothy, creamy, etc.; which are packed without liquids and in their most convenient state (for example: frozen or cooled or preserved naturally for consumption) and marketed ready to be subsequently cooked in about half the time of any conventional raw rice and served both in the context of individual consumer and businesses of the food catering sector, where said foods conserve all the flavor of foods cooked at the very instant and with homemade flavor, as a result of the novel method of preparing the viscous fluid and the single mixture, said technique having a series of novel and perfectly structured steps for being able to be implemented industrially, new additional steps being able to be added mostly in order to add more ingredients or condiments, depending on the type of the specific rice recipe to be prepared; such that retains all the flavor with which it been cooked, for being subsequently packed and marketed so that, once in the home or public environments where it is served, it is ready to be cooked and served on a plate both in the context referring to an individual consumer and in businesses of the food catering sector or establishments of the fast-food sector; and all this with a simple method formed by a series of novel and perfectly structured steps to be implemented industrially, new additional steps being able to be added in order to add more other ingredients depending on the type of food with a base of rice to be prepared specifically, but without exceeding the object of the invention.

In view of this description and set of drawings, the person skilled in the art will understand that the embodiments of the invention which have been described can be combined in many ways within the object of the invention. The invention has been described according to some preferred embodiments thereof (Figures 2, 3, 4) for a single package production and Figure 5 for a multiple package production, but it will be obvious to the person skilled in the art that multiples variations can be introduced in said preferred embodiments without departing from the object of the claimed invention.

## Claims

1. Method for preparing foods comprising a base of rice, **characterized in that** it comprises the following steps:
a) cooking a first group of ingredients defined as the primary ingredients;
b) setting aside, on one hand the stocks and on the other the oils and/or fats, both derived from cooking the primary ingredients;
c) reducing said stocks set aside in step b) until obtaining a liquid defined as a viscous fluid;
d) cooking a second group of ingredients;
e) setting aside, on one hand the solid part and on the other hand the oils and/or fats, both derived from cooking the second group of ingredients in step d);
f) making a first mixture of:
- an amount of raw rice,
- the solid part set aside in step e) and corresponding to the second group of cooked ingredients; and
- the viscous fluid obtained in step c) until obtaining a mixture of ingredients defined as a single mixture;
g) making a second mixture of:
- the single mixture,
- a third group of uncooked ingredients defined as quaternary ingredients,
- the oils and/or fats derived from cooking said primary ingredients and set aside in step b); and
- the oils and/or fats derived from cooking the second group of ingredients and set aside in step e);
h) packing said second mixture obtained in step g) in a container;
i) sterilizing said container in an autoclave; and
j) transporting said sterilized container to the corresponding packaging and storage for sale and consumption.

2. Method for preparing foods comprising a base of rice, **characterized in that** it comprises the following steps:
a) cooking a first group of ingredients defined as the primary ingredients;
b) setting aside, on one hand the stocks and on the other the oils and/or fats, both derived from cooking the primary ingredients;
c) reducing said stocks set aside in step b) until obtaining a liquid defined as a viscous fluid;
d) making a mixture of:
- an amount of raw rice,
- the viscous fluid obtained in step c) until obtaining a mixture of ingredients defined as a single mixture;
e) packing said single mixture obtained in step d) in a first container;
f) cooking a second group of ingredients;
g) packing the cooked solid part in step f) and corresponding to the second group of ingredients in at least a second container;
h) packing a third group of uncooked ingredients and the oils and/or fats derived from cooking said primary ingredients and set aside in step b), defined as quaternary ingredients, in a third container;
i) sterilizing each of the containers in an autoclave; and
j) transporting respective sterilized containers to the corresponding packaging and storage for sale and consumption.

3. Method for preparing foods comprising a base of rice according to any of the preceding claims, **characterized in that** the second group of ingredients is in turn subdivided into two sub-groups:
- a first sub-group of ingredients defined as secondary ingredients; and
- a second sub-group of ingredients defined as tertiary ingredients; where both sub-groups are cooked independently with respect to one another.

4. Method for preparing foods comprising a base of rice according to claims 2 and 3, **characterized in that** step g) of packing the cooked solid part of the second group of ingredients is subdivided into two sub-steps:
e1) packing the secondary ingredients cooked in step f), and the cooking of which is performed independently with respect to the tertiary ingredients, in a second container; and
e2) packing the tertiary ingredients cooked in step f), and the cooking of which is performed independently with respect to the secondary ingredients, in a third container.

5. Method for preparing foods comprising a base of rice according to any of the preceding claims, **characterized in that**:
- the primary ingredients used for preparing the viscous fluid comprise meat, fish, vegetables and/or greens;
- the second group of ingredients used for preparing the solid part of the food to be prepared comprises meat, fish, vegetables and/or greens; and
- the quaternary ingredients comprise uncooked foods such as spices and/or additives.

6. Method for preparing foods comprising a base of rice according to any of the preceding claims, **characterized in that** in step c) of reducing the stocks set aside in step b) until obtaining a liquid defined as a viscous fluid, the stocks are reduced until the viscous fluid comprises:
- a relative moisture comprised between 85 and 95 grams of water per 100 grams of viscous fluid;
- a density comprised between 1.02 and 1.08 kilograms per liter of viscous fluid; and
- a viscosity comprised between 55000 and 65000 centipoises.

7. Method for preparing foods comprising a base of rice according to any of the preceding claims, **characterized in that** in the step of sterilizing said at least one container in an autoclave, said sterilizing is performed at a temperature comprised between 110 and 130 degrees Celsius.

8. Food product obtained through the method defined in claim 1 and any of the preceding claims with the exception of claim 2, obtaining a product packed in a single container.

9. Food product obtained through the method defined in claim 2 and any of the preceding claims with the exception of claim 1, obtaining a product packed in at least three containers, where the first container comprises the single mixture, the second container comprises the second group of ingredients, and the third container comprises the uncooked quaternary ingredients.
